# EUROPÄISCHE PATENTSCHRIFT

(11) **EP 3 380 985 B1**
(45) Veröffentlichungstag und Bekanntmachung des Hinweises auf die Patenterteilung: **13.10.2021**
(21) Anmeldenummer: 16798464.0
(22) Anmeldetag: 17.11.2016
(51) Int. Cl.: G06K 9/00

(54) **IDENTIFIKATIONSDOKUMENT UND VERFAHREN ZUR IDENTIFIZIERUNG EINER PERSON**
IDENTIFICATION DOCUMENT AND METHOD FOR IDENTIFYING AN INDIVIDUAL
DOCUMENT D'IDENTIFICATION ET PROCÉDÉ D'IDENTIFICATION D'UNE PERSONNE

(30) Priorität: 24.11.2015 DE 102015120315
(43) Veröffentlichungstag der Anmeldung: 03.10.2018
(73) Patentinhaber: Bundesdruckerei GmbH, 10969 Berlin (DE)
(72) Erfinder: WOLF, Andreas, 13158 Berlin (DE); KULIKOVSKA, Olga, 14165 Berlin (DE); KULIKOVSKY, Lazar, 14165 Berlin (DE); PAESCHKE, Manfred, 16348 Wandlitz (DE)
(74) Vertreter: Patentship Patentanwaltsgesellschaft mbH
(86) Internationale Anmeldenummer: PCT/EP2016/077974
(87) Internationale Veröffentlichungsnummer: WO 2017/089216

(56) Entgegenhaltungen:
- EP-A2- 2 797 043
- DE-A1- 19 648 767
- DE-C1- 19 618 144
- US-A1- 2005 240 778
- US-A1- 2011 002 461

## Beschreibung

Die vorliegende Erfindung betrifft ein Identifikationsdokument zur Identifizierung einer Person sowie ein Verfahren zur Identifizierung einer Person mit einem solchen Identifikationsdokument.

Die Offenlegungsschrift US 2011/0002461 A1 zeigt einen Chip umfassend einen Fingerabdrucksensor. Der Fingerabdrucksensor ist in der Lage, einen Fingerabdruck eines Fingers zu erfassen. Der Chip umfasst einen PUF-("physical unclonable function")-Schaltkreis.

Die Offenlegungsschrift EP 2 797 043 A2 zeigt ein Verfahren zur Durchführung einer Chipkartenfunktion einer Chipkarte, die einen ersten Chip und einen zweiten Chip aufweist. Die beiden Chips sind in ein Kartenmaterial der Chipkarte eingebettet. Der erste Chip umfasst einen Prozessor, eine Signalquelle und ein Sensorelement. Das Sensorelement ist dazu ausgebildet, ein erstes Signal von einer Signalquelle über eine erste PUF zu empfangen. Wenn der Sensor ein erstes Signal über die PUF empfängt, führt der erste Chip eine Schlüsselableitungsfunktion durch, um einen ersten kryptografischen Schlüssel zu berechnen.

Zur eindeutigen Identifizierung einer Person werden häufig Fingerabdruckscanner verwendet, die meist die Oberfläche einer oder mehrerer Fingerbeeren dieser Person mittels eines biometrischen Sensors erfassen, um ein digitales Abbild des Fingerabdrucks zu erzeugen. Anschließend wird das digitale Abbild des Fingerabdrucks mit einem Referenzbild verglichen. Ebenso können für einen Merkmalsvergleich eindeutige Features, z.B. Minutien, aus dem digitalen Abbild des Fingerabdrucks extrahiert werden und mit Referenzdaten verglichen werden. Bei der Erzeugung eines digitalen Abbildes des Fingerabdrucks können unterschiedliche biometrische Sensoren zum Einsatz kommen, die auf unterschiedlichen Effekten beruhen können, beispielsweise elektrische Kapazität, gestörte optische Totalreflektion, Druck, Ultraschall und dergleichen.

Der Vergleich zwischen dem digitalen Abbild eines Fingerabdrucks bzw. den daraus extrahierten Features und einem Referenzbild bzw. Referenzdaten erfordert einen beträchtlichen Umfang an Daten, anwendungsabhängig entweder durch eine große Fläche oder eben auch häufig durch eine möglichst hohe räumliche Auflösung des verwendeten biometrischen Sensors. Außerdem ist die Bereitstellung adäquater Energie- und Rechenkapazitäten erforderlich. Derzeit nehmen herkömmliche qualitativ hochwertige Fingerabdruckscanner einen beträchtlichen Bauraum in Anspruch. Aus diesem Grund ist es sehr aufwändig, solche Fingerabdruckscanner in Objekten mit einem geringen Bauraum, insbesondere in kartenförmigen oder buchförmigen Identifikationsdokumenten, zu integrieren.

Es ist daher die Aufgabe der vorliegenden Erfindung, ein Konzept zur Identifizierung einer Person mittels eines biometrischen Merkmals zu schaffen, das auch bei Objekten mit einem geringen Bauraum, insbesondere in kartenförmigen oder buchförmigen Identifikationsdokumenten, zum Einsatz kommen kann.

Diese Aufgabe wird durch die Merkmale der unabhängigen Ansprüche gelöst. Vorteilhafte Ausbildungsformen sind Gegenstand der abhängigen Patentansprüche, der Beschreibung sowie der Figuren.

Die Erfindung basiert auf dem Ansatz, biometrische Informationen, die mit einem biometrischen Merkmal, insbesondere einem Fingerabdruck, im Zusammenhang stehen, bei der Herstellung eines Identifikationsdokuments personenspezifisch in Form einer physikalischen Struktur in dem Identifikationsdokument zu integrieren, um diese zum Zweck der Überprüfung im Zusammenspiel mit dem entsprechenden vom Merkmalsträger "live" beigebrachten biometrischen Merkmal auslesen bzw. überprüfen zu können.

Gemäß einem ersten Aspekt betrifft die Erfindung ein Identifikationsdokument zur Identifizierung einer Person mit einem Dokumentenkörper mit einer Oberfläche, welche einen Oberflächenbereich aufweist, welcher mit einem biometrischen Merkmal der Person beaufschlagbar ist, einer physikalischen Struktur, welche in dem Dokumentenkörper unterhalb des Oberflächenbereichs eingebettet ist, wobei die physikalische Struktur eine Physikalisch Nichtklonbare Funktion (physical unclonable function - PUF) ist, einer Sende-Empfangsstruktur, welche in dem Dokumentenkörper gebildet und ausgebildet ist, ein Stimulationssignal in Richtung des Oberflächenbereichs auszusenden, um ein an dem biometrischen Merkmal der Person reflektiertes Antwortsignal zu erhalten, das von der physikalischen Struktur abhängt, und einem Prozessor, welcher ausgebildet ist, die Person anhand des reflektierten Antwortsignals dem Identifikationsdokument zuzuordnen. Dadurch wird beispielsweise der Vorteil erreicht, das Identifikationsdokument direkt an die Person binden sowie die Überprüfung personalisiert und damit schneller und ressourcensparender gestalten zu können.

Das Identifikationsdokument kann eines der folgenden Dokumente sein: ein Personalausweis, ein Reisepass, ein Zugangskontrollausweis, ein Berechtigungsausweis, ein Unternehmensausweis, ein Steuerzeichen, ein Ticket, eine Geburtsurkunde, ein Führerschein, ein Kraftfahrzeugausweis, oder ein Zahlungsmittel, beispielsweise eine Bankkarte oder eine Kreditkarte. Das Identifikationsdokument kann ferner einen elektronisch auslesbaren Schaltkreis, beispielsweise einen RFID-Chip umfassen. Das Identifikationsdokument kann ein- oder mehrlagig sowie papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Die Sende-Empfangsstruktur ist ausgebildet, das Stimulationssignal in Richtung des Oberflächenbereichs durch die physikalische Struktur hindurch auszusenden, und/oder ausgebildet, das durch die physikalische Struktur hindurch übertragene Antwortsignal zu empfangen. Dadurch wird beispielsweise der Vorteil erreicht, dass sich die physikalische Struktur flexibel in dem Dokumentenkörper anordnen lässt, um beispielsweise Bauraum zu sparen.

Gemäß einer Ausführungsform handelt es sich bei dem biometrischen Merkmal der Person um die Papillarleisten auf einer Fingerbeere oder den Venenverlauf in einem Finger oder einer Hand der Person, wobei der Oberflächenbereich für die Auflage des Fingers oder der Hand der Person ausgebildet ist. Dadurch wird beispielweise der technische Vorteil erreicht, dass die Identifizierung der Person benutzerfreundlich durchgeführt werden kann, da die Person lediglich einen Finger bzw. eine Hand auf den Oberflächenbereich des Dokumentenkörpers legen muss.

Gemäß einer Ausführungsform ist der Prozessor ausgebildet, das reflektierte Antwortsignal mit einem Referenzsignal zu vergleichen, um die Person anhand des reflektierten Antwortsignals dem Identifikationsdokument zuzuordnen. Dadurch wird beispielsweise der Vorteil erreicht, dass eine schnelle und ressourcensparende Prüfung durchgeführt werden kann.

Gemäß einer Ausführungsform umfasst das Identifikationsdokument ferner einen Speicher, welcher ausgebildet ist, das Referenzsignal bereitzustellen. Dadurch wird beispielsweise der Vorteil erreicht, dass die Prüfung lokal im Identifikationsdokument durchgeführt werden kann.

Gemäß einer Ausführungsform bilden das biometrische Merkmal, insbesondere das Referenzdatum des biometrischen Merkmals, und die physikalische Struktur eine zusammengesetzte Struktur, wobei das Referenzsignal eine Antwort der zusammengesetzten Struktur bei Beaufschlagung mit dem Stimulationssignal repräsentiert. Dadurch wird beispielsweise der Vorteil erreicht, dass die von dem biometrischen Merkmal der Person und der physikalischen Struktur gebildete zusammengesetzte Struktur eindeutig der Person zugeordnet werden kann.

Gemäß einer Ausführungsform ist das Stimulationssignal der physikalischen Struktur oder der Person oder dem Identifikationsdokument zugeordnet. Dadurch wird beispielsweise der Vorteil erreicht, dass das so zugeordnete Stimulationssignal derart gewählt werden kann, dass das resultierende Antwortsignal gewünschte Eigenschaften aufweist, die einen schnellen und ressourcensparenden Vergleich mit dem Referenzsignal erlauben.

Gemäß einer Ausführungsform ist die Sende-Empfangsstruktur ausgebildet, ein optisches Signal, insbesondere ein Infrarot-Signal oder ein Ultraviolett-Signal oder ein Weißlicht-Signal, als das Stimulationssignal auszusenden.

Gemäß einer Ausführungsform bilden das biometrische Merkmal und die physikalische Struktur eine verteilte Physikalisch Nichtklonbare Funktion. Dadurch wird beispielsweise der Vorteil erreicht, dass durch die Kombination aus dem biometrischen Merkmal der Person und der physikalischen Struktur eine verteilte Physikalisch Nichtklonbare Funktion gebildet wird, die eindeutig der Person zugeordnet werden kann.

Gemäß einer Ausführungsform grenzt die physikalische Struktur an den Oberflächenbereich an oder der Oberflächenbereich ist ein Abschnitt der physikalischen Struktur. Dadurch wird beispielsweise der Vorteil erreicht, dass bei der Herstellung Bauraum eingespart werden kann und/oder der Oberflächenbereich durch die physikalische Struktur selbst bereitgestellt wird.

Gemäß einer Ausführungsform ist die physikalische Struktur zwischen der Sende-Empfangsstruktur und dem Oberflächenbereich angeordnet, wobei die Sende-Empfangsstruktur einen Sender zum Aussenden des Stimulationssignals, insbesondere eine Sendediode, und einen Empfänger zum Empfangen des Antwortsignals, insbesondere eine Empfangsdiode, umfasst. Dadurch wird beispielsweise der Vorteil erreicht, dass sich die physikalische Struktur, der Sender und der Empfänger je nach Anwendung bei der Herstellung flexibel in dem Dokumentenkörper anordnen lassen, um beispielsweise den von diesen Elementen beanspruchten Bauraum auf ein Mindestmaß zu beschränken.

Gemäß einem zweiten Aspekt betrifft die Erfindung ein Verfahren zur Identifizierung einer Person mit einem Identifikationsdokument, wobei das Identifikationsdokument einen Dokumentenkörper mit einer Oberfläche, welche einen Oberflächenbereich aufweist, welcher mit einem biometrischen Merkmal der Person beaufschlagbar ist, eine physikalische Struktur, welche in dem Dokumentenkörper unterhalb des Oberflächenbereichs eingebettet ist, wobei die physikalische Struktur eine Physikalisch Nichtklonbare Funktion (physical unclonable function - PUF) ist, eine Sende-Empfangsstruktur, welche in dem Dokumentenkörper gebildet ist, und einen Prozessor aufweist, und wobei das Verfahren die folgenden Merkmale aufweist: Aussenden eines Stimulationssignals durch die Sende-Empfangsstruktur in Richtung des Oberflächenbereichs, um ein an dem biometrischen Merkmal der Person reflektiertes Antwortsignal zu erhalten, das von der physikalischen Struktur abhängt, wobei die Sende-Empfangsstruktur ausgebildet ist, das Stimulationssignal in Richtung des Oberflächenbereichs durch die physikalische Struktur hindurch auszusenden, und/oder ausgebildet ist, das durch die physikalische Struktur hindurch übertragene Antwortsignal zu empfangen, und Zuordnen der Person zu dem Identifikationsdokument anhand des reflektierten Antwortsignals.

Gemäß einer Ausführungsform handelt es sich bei dem biometrischen Merkmal der Person um die Papillarleisten einer Fingerbeere oder den Venenverlauf eines Fingers oder einer Hand der Person.

Gemäß einer Ausführungsform umfasst das Zuordnen der Person zu dem Identifikationsdokument anhand des reflektierten Antwortsignals das Vergleichen des reflektierten Antwortsignals mit einem Referenzsignal.

Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein schematisches Diagramm eines Identifikationsdokuments zur Identifizierung einer Person gemäß einer Ausführungsform;
- Fig. 2: ein schematisches Diagramm eines Identifikationsdokuments zur Identifizierung einer Person gemäß einer Ausführungsform;
- Fig. 3: ein schematisches Diagramm eines Identifikationsdokuments zur Identifizierung einer Person gemäß einer Ausführungsform;
- Fig. 4: ein schematisches Diagramm eines Verfahrens zur Identifizierung einer Person mit einem Identifikationsdokument gemäß einer Ausführungsform;
- Fig. 5: ein schematisches Diagramm eines Ablaufs bei der Identifizierung einer Person mit einem Identifikationsdokument gemäß einer Ausführungsform; und
- Fig. 6: ein schematisches Diagramm eines Ablaufs bei der Identifizierung einer Person mit einem Identifikationsdokument gemäß einer Ausführungsform.

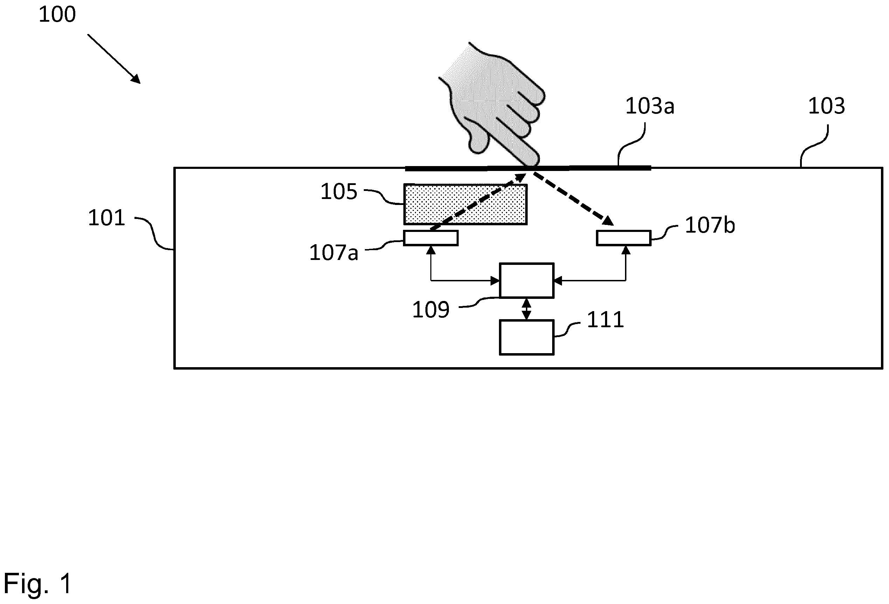

Die Figuren 1 bis 3 zeigen jeweils ein schematisches Diagramm eines Identifikationsdokuments 100 zur Identifizierung einer Person gemäß unterschiedlicher Ausführungsformen. Das Identifikationsdokument 100 umfasst einen Dokumentenkörper 101, insbesondere einen Kartenkörper 101, mit einer Oberfläche 103, welche einen Oberflächenbereich 103a aufweist, welcher mit einem biometrischen Merkmal der Person beaufschlagbar ist, eine physikalischen Struktur 105, welche in dem Dokumentenkörper 101 unterhalb des Oberflächenbereichs 103a eingebettet ist und bei welcher es sich um eine Physikalisch Nichtklonbare Funktion (PUF) handelt, eine Sende- und Empfangsstruktur 107a, 107b, welche in dem Dokumentenkörper 101 gebildet und ausgebildet ist, ein Stimulationssignal in Richtung des Oberflächenbereichs 103a auszusenden, um ein an dem biometrischen Merkmal der Person reflektiertes Antwortsignal zu erhalten, das von der physikalischen Struktur 105 abhängt, und einen Prozessor 109, welcher ausgebildet ist, die Person anhand des reflektierten Antwortsignals dem Identifikationsdokument 100 zuzuordnen.

Das Identifikationsdokument 100 kann eines der folgenden Dokumente sein: ein Personalausweis, ein Reisepass, ein Zugangskontrollausweis, ein Berechtigungsausweis, ein Unternehmensausweis, ein Steuerzeichen, ein Ticket, eine Geburtsurkunde, ein Führerschein, ein Kraftfahrzeugausweis, oder ein Zahlungsmittel, beispielsweise eine Bankkarte oder eine Kreditkarte. Das Identifikationsdokument 100 kann ferner einen elektronisch auslesbaren Schaltkreis, beispielsweise einen RFID-Chip umfassen. Das Identifikationsdokument kann ein- oder mehrlagig sowie papier- und/oder kunststoffbasiert sein. Das Dokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

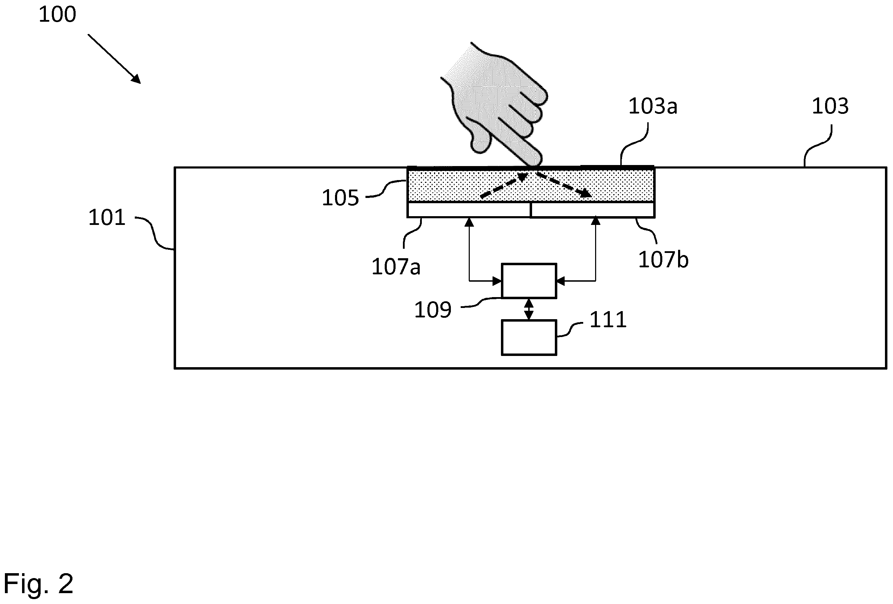

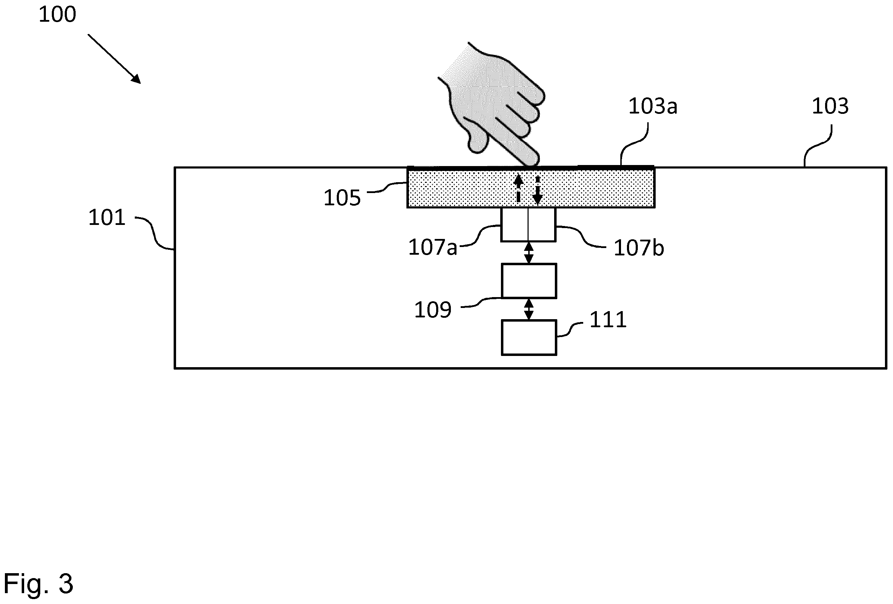

Die Sende- und Empfangsstruktur 107a, 107b ist ausgebildet, das Stimulationssignal in Richtung des Oberflächenbereichs 103a durch die physikalische Struktur 105 hindurch auszusenden, wie dies beispielsweise in Figur 1 dargestellt ist, und/oder die Sende- und Empfangsstruktur 107a, 107b ist ausgebildet, das durch die physikalische Struktur 105 hindurch übertragene Antwortsignal zu empfangen, wie dies beispielsweise in den Figuren 2 und 3 dargestellt ist.

Gemäß einer Ausführungsform handelt es sich bei dem biometrischen Merkmal der Person um die Papillarleisten oder den Venenverlauf eines Fingers oder einer Hand der Person, wobei der Oberflächenbereich 103a des Dokumentenkörpers 101 für die Auflage des Fingers bzw. der Hand der Person ausgebildet ist. Beispielweise kann der Oberflächenbereich 103a in Form einer Vertiefung auf der Oberfläche 103 des Dokumentenkörpers 101 zur Aufnahme des Fingers bzw. der Hand der Person ausgebildet sein.

Gemäß einer Ausführungsform ist der Prozessor 109 ausgebildet, das reflektierte Antwortsignal mit einem Referenzsignal zu vergleichen, um die Person anhand des reflektierten Antwortsignals dem Identifikationsdokument 100 zuzuordnen und beispielsweise zu verifizieren.

Gemäß einer Ausführungsform umfasst das Identifikationsdokument 100 ferner einen Speicher 111, welcher ausgebildet ist, dem Prozessor 109 das Referenzsignal für den Vergleich mit dem Antwortsignal bereitzustellen.

Gemäß einer Ausführungsform bilden das biometrische Merkmal und die physikalische Struktur 105 eine zusammengesetzte Struktur, wobei das Referenzsignal eine Antwort der zusammengesetzten Struktur bei Beaufschlagung mit dem Stimulationssignal repräsentiert.

Gemäß einer Ausführungsform ist das Stimulationssignal der physikalischen Struktur 105 oder der Person oder dem Identifikationsdokument 100 zugeordnet.

Gemäß einer Ausführungsform ist die Sende-und Empfangsstruktur 107a, 107b ausgebildet, ein optisches Signal, insbesondere ein Infrarot-Signal oder ein Ultraviolett-Signal oder ein Weißlicht-Signal, als das Stimulationssignal auszusenden. In diesem Fall kann der Oberflächenbereich 103a des Dokumentenkörpers 101 optisch transparent ausgebildet sein. Gemäß weiterer Ausführungsformen kann die Sende-Empfangsstruktur 107a, 107b dazu ausgebildet sein, anstatt eines optischen Signals die folgenden Arten von Signalen auszusenden und zu empfangen: kapazitive Signale, thermische Signale, Ultraschallsignale und dergleichen.

Gemäß einer Ausführungsform bilden das biometrische Merkmal und die physikalische Struktur 105 eine verteilte Physikalisch Nichtklonbare Funktion (PUF).

Gemäß Ausführungsformen der Erfindung können insbesondere optische PUF-Strukturen zur Bereitstellung der physikalischen Struktur 105 verwendet werden. Bei einer solchen Ausführungsform kann die PUF 105 beispielsweise durch herstellungsbedingte Materialinhomogenitäten gebildet werden. Diese Materialinhomogenitäten können beispielsweise durch Partikel, Pigmente, Strukturen oder Einschlüsse in fester oder gasförmiger Form mit farbigen, transparenten, reflektierenden, absorbierenden, streuenden, diffraktiven, leitfähigen, dielektrischen, magnetischen, radioaktiven, lumineszierenden, fluoreszierenden, auf Upconversion basierenden, elektrochromen, thermochromen, photochromen, elastomeren, piezoelektrischen oder chemisch reaktiven Materialien definiert werden.

Gemäß einer Ausführungsform grenzt die physikalische Struktur 105 an den Oberflächenbereich 103a an oder der Oberflächenbereich 103a ist ein Abschnitt der physikalischen Struktur 105, wie dies beispielsweise in den Figuren 2 und 3 dargestellt ist.

Gemäß einer Ausführungsform ist die physikalische Struktur 105 zwischen der Sende-Empfangsstruktur 107a, 107b und dem Oberflächenbereich 103a angeordnet, wobei die Sende-Empfangsstruktur 107a, 107b einen Sender 107a zum Aussenden des Stimulationssignals, insbesondere eine Sendediode, und einen Empfänger 107b zum Empfangen des Antwortsignals, insbesondere eine Empfangsdiode, umfasst.

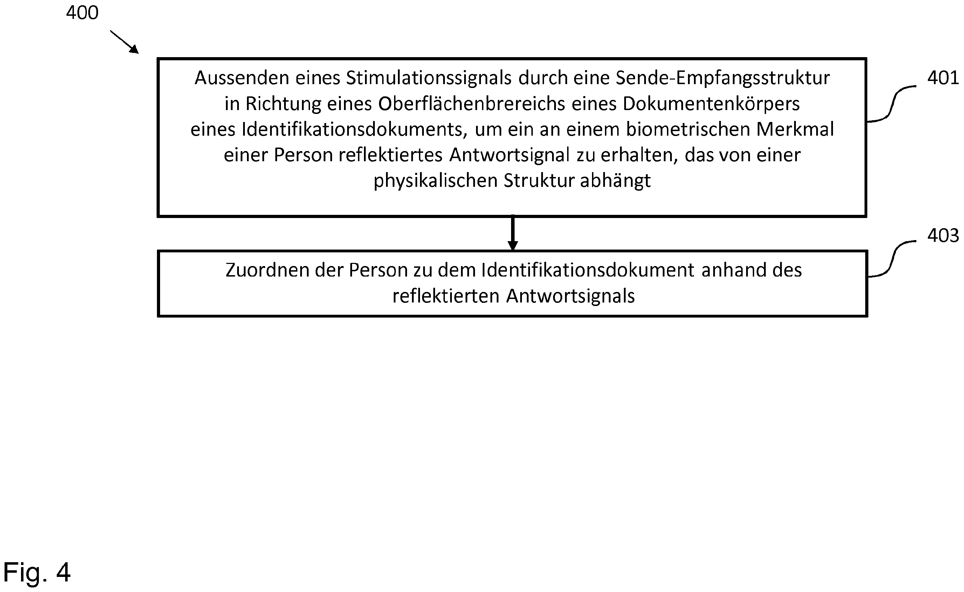

Figur 4 zeigt ein schematisches Diagramm eines Verfahrens 400 zur Identifizierung einer Person mit einem Identifikationsdokument 100, wobei das Identifikationsdokument 100 einen Dokumentenkörper 101 mit einer Oberfläche 103, welche einen Oberflächenbereich 103a aufweist, welcher mit einem biometrischen Merkmal der Person beaufschlagbar ist, eine physikalische Struktur 105, welche in dem Dokumentenkörper 101 unterhalb des Oberflächenbereichs 103a eingebettet ist und bei welcher es sich um eine Physikalisch Nichtklonbare Funktion (PUF) handelt, eine Sende- und Empfangsstruktur 107a, 107b, welche in dem Dokumentenkörper 101 gebildet ist, und einen Prozessor 109 aufweist, und wobei das Verfahren 400 einen Schritt 401 des Aussendens eines Stimulationssignals durch die Sende-Empfangsstruktur 107a, 107b in Richtung des Oberflächenbereichs 103a umfasst, um ein an dem biometrischen Merkmal der Person reflektiertes Antwortsignal zu erhalten, das von der physikalischen Struktur 105 abhängt, wobei die Sende-Empfangsstruktur 107a, 107b ausgebildet ist, das Stimulationssignal in Richtung des Oberflächenbereichs 103a durch die physikalische Struktur 105 hindurch auszusenden, und/oder ausgebildet ist, das durch die physikalische Struktur 105 hindurch übertragene Antwortsignal zu empfangen, sowie einen Schritt 403 des Zuordnens 403 der Person zu dem Identifikationsdokument 100 anhand des reflektierten Antwortsignals.

Gemäß einer Ausführungsform handelt es sich bei dem biometrischen Merkmal der Person um die Papillarleisten der Fingerbeeren oder einen Venenverlauf eines Fingers oder einer Hand der Person.

Gemäß einer Ausführungsform umfasst der Schritt 403 des Zuordnens der Person zu dem Identifikationsdokument anhand des reflektierten Antwortsignals das Vergleichen des reflektierten Antwortsignals mit einem Referenzsignal.

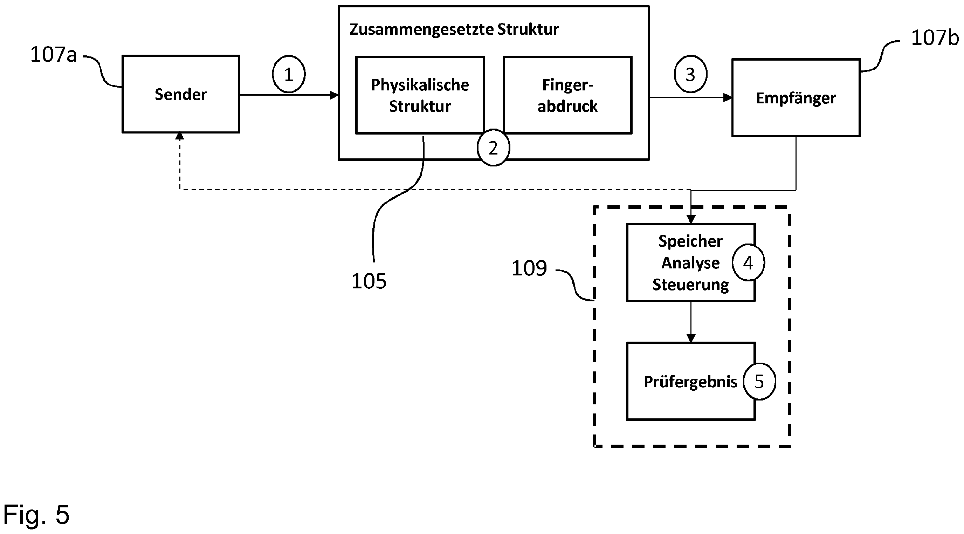

Figur 5 zeigt ein schematisches Diagramm eines Ablaufs bei der Identifizierung einer Person mit einem Identifikationsdokument gemäß einer Ausführungsform, beispielsweise einem der in den Figuren 1, 2 und 3 dargestellten Identifikationsdokumente 100. Das vom Sender 107a ausgesendete Stimulationssignal interagiert mit der aus der physikalischen Struktur 105 und dem Fingerabdruck zusammengesetzten Struktur und wird als Antwortsignal vom Empfänger 107b empfangen. Das vom Empfänger 107b empfangene Antwortsignal wird an den Prozessor 109 weitergeleitet und vom Prozessor 109 mit einem im Speicher hinterlegten Referenzsignal verglichen. Das Ergebnis dieses Vergleichs, z.B. ein Maß der Übereinstimmung zwischen dem Antwortsignal und dem Referenzsignal, bildet die Grundlage für das Prüfergebnis des Prozessors 109.

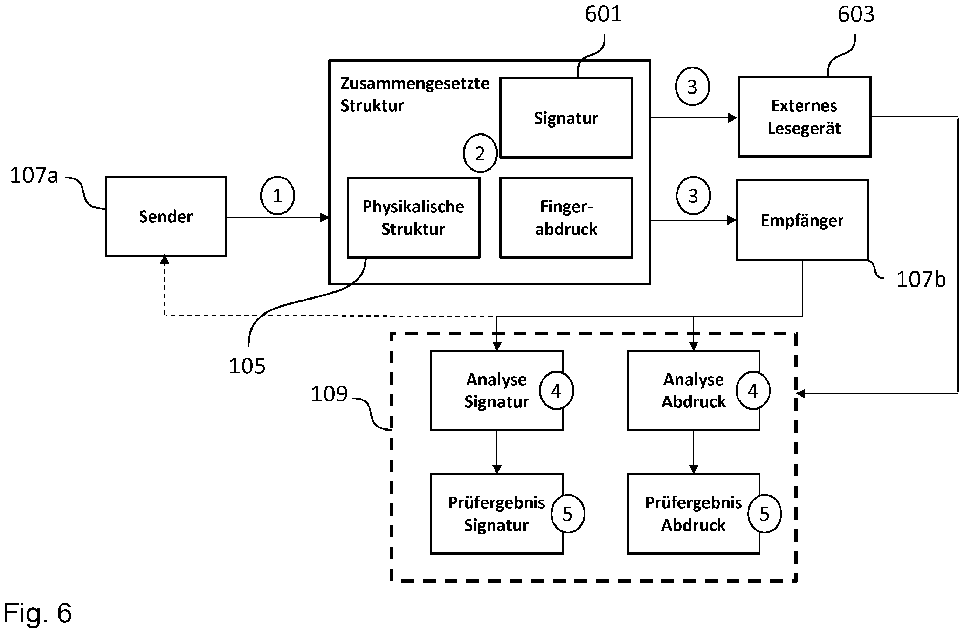

Figur 6 zeigt ein schematisches Diagramm eines Ablaufs bei der Identifizierung einer Person mit einem Identifikationsdokument gemäß einer Ausführungsform. Von den in den Figuren 1 bis 3 dargestellten Ausführungsformen des Identifikationsdokuments 100 unterscheidet sich die im Rahmen des Ablaufdiagramms von Figur 6 zum Einsatz kommende Ausführungsform des Identifikationsdokuments 100 dadurch, dass in dessen Dokumentenkörper neben der physikalischen Struktur 105 ein weiterer materieller Bereich 601 ausgebildet ist, in dem zusätzliche Informationen auslesbar hinterlegt sind. Bei diesen zusätzlichen Informationen kann es sich beispielsweise, wie in Figur 6 dargestellt, um eine elektronische Signatur handeln. In einer Ausführungsform kann der weitere materielle Bereich 601 auch Teil der physikalischen Struktur 105 sein.

Zusätzlich zu den vorstehend im Zusammenhang mit Figur 5 beschriebenen Schritten weist das Ablaufdiagramm von Figur 6 die folgenden Schritte bzw. Phasen auf. Parallel zum Empfangen des Antwortsignals durch den Empfänger 107b kann ein externes Lesegerät 603 die Reaktion des weiteren Bereichs 601 auf das vom Sender 107a ausgesendete Stimulationssignal bestimmen. Dieses Antwortsignal des weiteren Bereichs 601 kann wiederum dem Prozessor 109 zugeführt werden, beispielsweise über eine RFID-Schnittstelle, um für eine Analyse und eine Überprüfung der Signatur parallel zu der Analyse und Prüfung des Fingerabdrucks herangezogen zu werden.

Ausführungsformen der Erfindung weisen unter anderem die folgenden Vorteile auf. Es werden keine direkten Abbildungen des biometrischen Merkmals, insbesondere Fingerabdrucks, erzeugt oder in dem Identifikationsdokument gespeichert. Es werden keine digitalen Templates des biometrischen Merkmals, insbesondere Fingerabdrucks, generiert und in dem Identifikationsdokument gespeichert. Das biometrische Merkmal, insbesondre der Fingerabdruck, kann nicht durch das Auslesen der in der physikalischen Struktur gespeicherten Informationen rekonstruiert werden, was auch als "privacy by design" bezeichnet wird. Gegenüber herkömmlichen Ansätzen wird die Menge an digitalen Daten, die erzeugt, gespeichert und analysiert werden, bedeutend reduziert. Beim Vergleich zwischen Antwortsignal und Referenzsignal kann gegenüber auf Bilddaten basierenden Vergleichen die Auflösung erhöht werden, wodurch die Erkennungssicherheit gesteigert werden kann. Der Bedarf an Bauraum, Energie und Rechenleistung kann verringert werden.

### BEZUGSZEICHENLISTE

- 100: Identifikationsdokument
- 101: Dokumentenkörper
- 103: Oberfläche des Dokumentenkörpers
- 103a: Oberflächenbereich
- 105: physikalische Struktur
- 107a: Sender einer Sende-Empfangsstruktur
- 107b: Empfänger einer Sende-Empfangsstruktur
- 109: Prozessor
- 111: Speicher

- 400: Verfahren zum Verifizieren eines Dokuments
- 401: Aussenden eines Stimulationssignals
- 403: Zuordnen der Person zu dem Identifikationsdokument

- 601: materieller Bereich
- 603: Lesegerät

## Patentansprüche

1. Identifikationsdokument (100) zur Identifizierung einer Person mit:
einem Dokumentenkörper (101) mit einer Oberfläche (103), welche einen Oberflächenbereich (103a) aufweist, welcher mit einem biometrischen Merkmal der Person beaufschlagbar ist;
einer physikalischen Struktur (105), welche in dem Dokumentenkörper (101) unterhalb des Oberflächenbereichs (103a) eingebettet ist, wobei die physikalische Struktur (105) eine Physikalisch Nichtklonbare Funktion ist;
einer Sende-Empfangsstruktur (107a, 107b), welche in dem Dokumentenkörper (101) gebildet und ausgebildet ist, ein Stimulationssignal in Richtung des Oberflächenbereichs (103a) auszusenden, um ein an dem biometrischen Merkmal der Person reflektiertes Antwortsignal zu erhalten, das von der physikalischen Struktur (105) abhängt, wobei die Sende-Empfangsstruktur (107a, 107b) ausgebildet ist, das Stimulationssignal in Richtung des Oberflächenbereichs (103a) durch die physikalische Struktur (105) hindurch auszusenden, und/oder wobei die Sende-Empfangsstruktur (107a, 107b) ausgebildet ist, das durch die physikalische Struktur (105) hindurch übertragene Antwortsignal zu empfangen; und
einem Prozessor (109), welcher ausgebildet ist, die Person anhand des reflektierten Antwortsignals dem Identifikationsdokument (100) zuzuordnen.

2. Identifikationsdokument (100) nach Anspruch 1, wobei das biometrische Merkmal der Person die Papillarleisten der Fingerbeere(n) oder der Venenverlauf von Finger- oder Handvenen der Person ist, und wobei der Oberflächenbereich (103a) für die Auflage des Fingers oder der Handfläche der Person ausgebildet ist.

3. Identifikationsdokument (100) nach einem der vorstehenden Ansprüche, wobei der Prozessor (109) ausgebildet ist, das reflektierte Antwortsignal mit einem Referenzsignal zu vergleichen, um die Person anhand des reflektierten Antwortsignals dem Identifikationsdokument (100) zuzuordnen.

4. Identifikationsdokument (100) nach Anspruch 3, wobei das Identifikationsdokument (100) ferner einen Speicher (111) umfasst, welcher ausgebildet ist, das Referenzsignal bereitzustellen.

5. Identifikationsdokument (100) nach Anspruch 3 oder 4, wobei das biometrische Merkmal und die physikalische Struktur (105) eine zusammengesetzte Struktur bilden, und wobei das Referenzsignal eine Antwort der zusammengesetzten Struktur bei Beaufschlagung mit dem Stimulationssignal repräsentiert.

6. Identifikationsdokument (100) nach einem der vorstehenden Ansprüche, wobei das Stimulationssignal der physikalischen Struktur (105) oder der Person oder dem Identifikationsdokument (100) zugeordnet ist.

7. Identifikationsdokument (100) nach einem der vorstehenden Ansprüche, wobei die Sende-Empfangsstruktur (107a, 107b) ausgebildet ist, ein optisches Signal, insbesondere ein Infrarot-Signal oder ein Ultraviolett-Signal oder ein Weißlicht-Signal, als das Stimulationssignal auszusenden.

8. Identifikationsdokument (100) nach Anspruch 1, wobei das biometrische Merkmal und die physikalische Struktur (105) eine verteilte Physikalisch Nichtklonbare Funktion bilden.

9. Identifikationsdokument (100) nach einem der vorstehenden Ansprüche, wobei die physikalische Struktur (105) an den Oberflächenbereich (103a) angrenzt oder wobei der Oberflächenbereich (103a) ein Abschnitt der physikalischen Struktur (105) ist.

10. Identifikationsdokument (100) nach einem der vorstehenden Ansprüche, wobei die physikalische Struktur (105) zwischen der Sende-Empfangsstruktur (107a, 107b) und dem Oberflächenbereich (103a) angeordnet ist, und wobei die Sende-Empfangsstruktur (107a, 107b) einen Sender (107a) zum Aussenden des Stimulationssignals, insbesondere eine Sendediode, und einen Empfänger (107b) zum Empfangen des Antwortsignals, insbesondere eine Empfangsdiode, umfasst.

11. Verfahren (400) zur Identifizierung einer Person mit einem Identifikationsdokument (100), wobei das Identifikationsdokument (100) einen Dokumentenkörper (101) mit einer Oberfläche (103), welche einen Oberflächenbereich (103a) aufweist, welcher mit einem biometrischen Merkmal der Person beaufschlagbar ist, eine physikalische Struktur (105), welche in dem Dokumentenkörper (101) unterhalb des Oberflächenbereichs (103a) eingebettet ist, wobei die physikalische Struktur (105) eine Physikalisch Nichtklonbare Funktion ist, eine Sende-Empfangsstruktur (107a, 107b), welche in dem Dokumentenkörper (101) gebildet ist, und einen Prozessor (109) aufweist, und wobei das Verfahren (400) die folgenden Merkmale aufweist:
Aussenden (401) eines Stimulationssignals durch die Sende-Empfangsstruktur (107a, 107b) in Richtung des Oberflächenbereichs (103a), um ein an dem biometrischen Merkmal der Person reflektiertes Antwortsignal zu erhalten, das von der physikalischen Struktur (105) abhängt, wobei die Sende-Empfangsstruktur (107a, 107b) ausgebildet ist, das Stimulationssignal in Richtung des Oberflächenbereichs (103a) durch die physikalische Struktur (105) hindurch auszusenden, und/oder wobei die Sende-Empfangsstruktur (107a, 107b) ausgebildet ist, das durch die physikalische Struktur (105) hindurch übertragene Antwortsignal zu empfangen; und
Zuordnen (403) der Person zu dem Identifikationsdokument (100) anhand des reflektierten Antwortsignals.

12. Verfahren (400) nach Anspruch 11, wobei das biometrische Merkmal der Person die Papillarleisten der Fingerbeere(n) oder der Venenverlauf eines oder mehrerer Finger oder der Handfläche der Person ist.

13. Verfahren (400) nach Anspruch 11 oder 12, wobei das Zuordnen (403) der Person zu dem Identifikationsdokument (100) anhand des reflektierten Antwortsignals das Vergleichen des reflektierten Antwortsignals mit einem Referenzsignal umfasst.

14. Computerprogramm, umfassend Befehle, die
bewirken, dass das Identifikationsdokument des Anspruchs 1 die
Verfahrensschritte nach einem der Ansprüche 11 bis 13 ausführt.

## Claims

1. An identification document (100) for identifying a person, comprising:
a document body (101) with a surface (103) which comprises a surface area (103a) to which a biometric feature of the person can be applied;
a physical structure (105) which is embedded in the document body (101) below the surface area (103a), wherein the physical structure (105) is a physically non-clonable function;
a transceiver structure (107a, 107b) which is formed in the document body (101) and configured to transmit a stimulation signal in the direction of the surface area (103a) in order to receive a response signal reflected at the biometric feature of the person, which depends on the physical structure (105), wherein the transceiver structure (107a, 107b) is configured to transmit the stimulation signal in the direction of the surface area (103a) through the physical structure (105), and/or wherein the transceiver structure (107a, 107b) is configured to receive the response signal transmitted through the physical structure (105); and
a processor (109) which is configured to assign the person to the identification document (100) on the basis of the reflected response signal.

2. The identification document (100) according to claim 1, wherein the biometric feature of the person is the papillary ridges of the fingertip(s) or the vein course of finger or hand veins of the person, and wherein the surface area (103a) is configured for the support of the finger or the palm the person.

3. The identification document (100) according to one of the preceding claims, wherein the processor (109) is configured to compare the reflected response signal with a reference signal in order to assign the person to the identification document (100) on the basis of the reflected response signal.

4. The identification document (100) according to claim 3, wherein the identification document (100) further comprises a memory (111) which is configured to provide the reference signal.

5. The identification document (100) according to claim 3 or 4, wherein the biometric feature and the physical structure (105) form a composite structure, and wherein the reference signal represents a response of the composite structure when the stimulation signal is applied.

6. The identification document (100) according to one of the preceding claims, wherein the stimulation signal is assigned to the physical structure (105) or to the person or to the identification document (100).

7. The identification document (100) according to one of the preceding claims, wherein the transceiver structure (107a, 107b) is configured to transmit an optical signal, in particular an infrared signal or an ultraviolet signal or a white light signal, as the stimulation signal.

8. The identification document (100) according to claim 1, wherein the biometric feature and the physical structure (105) form a distributed physically non-clonable function.

9. The identification document (100) according to one of the preceding claims, wherein the physical structure (105) adjoins the surface area (103a) or wherein the surface area (103a) is a section of the physical structure (105).

10. The identification document (100) according to one of the preceding claims, wherein the physical structure (105) is arranged between the transceiver structure (107a, 107b) and the surface area (103a), and wherein the transceiver structure (107a, 107b) comprises a transmitter (107a) for transmitting the stimulation signal, in particular a transmitting diode, and a receiver (107b) for receiving the response signal, in particular a receiving diode.

11. A method (400) for identifying a person with an identification document (100), wherein the identification document (100) comprises a document body (101) with a surface (103) which comprises a surface area (103a) onto which a biometric feature of the person can be applied, a physical structure (105) which is embedded in the document body (101) below the surface area (103a), wherein the physical structure (105) is a physically non-clonable function, a transceiver structure (107a, 107b), which is formed in the document body (101), and a processor (109), and wherein the method (400) comprises the following features:
transmitting (401) a stimulation signal through the transceiver structure (107a, 107b) in the direction of the surface area (103a) in order to receive a response signal reflected at the biometric feature of the person, which depends on the physical structure (105), wherein the transceiver structure (107a, 107b) is configured to transmit the stimulation signal in the direction of the surface area (103a) through the physical structure (105), and/or wherein the transceiver structure (107a, 107b) is configured to receive the response signal transmitted through the physical structure (105); and
assigning (403) the person to the identification document (100) on the basis of the reflected response signal.

12. The method (400) according to claim 11, wherein the biometric feature of the person is the papillary ridges of the fingertip(s) or the course of the veins of one or more fingers or of the palm of the person.

13. The method (400) according to claim 11 or 12, wherein assigning (403) the person to the identification document (100) on the basis of the reflected response signal comprises comparing the reflected response signal with a reference signal.

14. A computer program, comprising instructions which cause the identification document of claim 1 to execute the method steps according to one of claims 11 to 13.

## Revendications

1. Document d'identification (100) destiné à l'identification d'une personne, comprenant :
un corps de document (101) doté d'une surface (103) qui présente une zone de surface (103a) qui peut être soumise à une caractéristique biométrique de la personne ;
une structure physique (105) qui est incorporée dans le corps de document (101) au-dessous de la zone de surface (103a), la structure physique (105) étant une fonction physiquement non clonable ;
une structure d'émission/réception (107a, 107b) qui est formée dans le corps de document (101) et est réalisée pour émettre un signal de stimulation en direction de la zone de surface (103a) afin d'obtenir un signal de réponse réfléchi sur la caractéristique biométrique de la personne et qui dépend de la structure physique (105), la structure d'émission/réception (107a, 107b) étant réalisée pour émettre le signal de stimulation en direction de la zone de surface (103a) à travers la structure physique (105), et/ou la structure d'émission/réception (107a, 107b) étant réalisée pour recevoir le signal de réponse transmis à travers la structure physique (105) ; et
un processeur (109) qui est réalisé pour associer la personne au document d'identification (100) à l'aide du signal de réponse réfléchi.

2. Document d'identification (100) selon la revendication 1, dans lequel la caractéristique biométrique de la personne correspond aux crêtes papillaires de la pulpe des doigts ou au dessin des veines des veines des doigts ou de la main de la personne, et la zone de surface (103a) étant réalisée pour poser le doigt ou la paume de la personne.

3. Document d'identification (100) selon l'une quelconque des revendications précédentes, dans lequel le processeur (109) est réalisé pour comparer le signal de réponse réfléchi avec un signal de référence afin d'associer la personne au document d'identification (100) à l'aide du signal de réponse réfléchi.

4. Document d'identification (100) selon la revendication 3, dans lequel le document d'identification (100) comprend en outre une mémoire (111) qui est réalisée pour fournir le signal de référence.

5. Document d'identification (100) selon la revendication 3 ou 4, dans lequel la caractéristique biométrique et la structure physique (105) constituent une structure composée, et dans lequel le signal de référence représente une réponse de la structure composée si elle est soumise au signal de stimulation.

6. Document d'identification (100) selon l'une quelconque des revendications précédentes, dans lequel le signal de stimulation est associé à la structure physique (105) ou à la personne ou au document d'identification (100).

7. Document d'identification (100) selon l'une quelconque des revendications précédentes, dans lequel la structure d'émission/réception (107a, 107b) est réalisée pour émettre en tant que signal de stimulation un signal optique, en particulier un signal infrarouge ou un signal ultraviolet ou un signal de lumière blanche.

8. Document d'identification (100) selon la revendication 1, dans lequel la caractéristique biométrique et la structure physique (105) constituent une fonction distribuée physiquement non clonable.

9. Document d'identification (100) selon l'une quelconque des revendications précédentes, dans lequel la structure physique (105) est adjacente à la zone de surface (103a), ou dans lequel la zone de surface (103a) est une partie de la structure physique (105).

10. Document d'identification (100) selon l'une quelconque des revendications précédentes, dans lequel la structure physique (105) est disposée entre la structure d'émission/réception (107a, 107b) et la zone de surface (103a), et dans lequel la structure d'émission/réception (107a, 107b) comprend un émetteur (107a) pour émettre le signal de stimulation, en particulier une diode d'émission, et un récepteur (107b) pour recevoir le signal de réponse, en particulier une diode de réception.

11. Procédé (400) destiné à l'identification d'une personne par un document d'identification (100), le document d'identification (100) présentant un corps de document (101) doté d'une surface (103) qui présente une zone de surface (103a) qui est soumise à une caractéristique biométrique de la personne, une structure physique (105) qui est incorporée dans le corps de document (101) au-dessous de la zone de surface (103a), la structure physique (105) étant une fonction physiquement non clonable, une structure d'émission/réception (107a, 107b) qui est formée dans le corps de document (101), et un processeur (109), et le procédé (400) présentant les caractéristiques suivantes consistant à :
émettre (401) un signal de stimulation par la structure d'émission/réception (107a, 107b) en direction de la zone de surface (103a) afin d'obtenir un signal de réponse réfléchi sur la caractéristique biométrique de la personne et qui dépend de la structure physique (105), la structure d'émission/réception (107a, 107b) étant réalisée pour émettre le signal de stimulation en direction de la zone de surface (103a) à travers la structure physique (105), et/ou la structure d'émission/réception (107a, 107b) étant réalisée pour recevoir le signal de réponse transmis à travers la structure physique (105) ; et
associer (403) la personne au document d'identification (100) à l'aide du signal de réponse réfléchi.

12. Procédé (400) selon la revendication 11, dans lequel la caractéristique biométrique de la personne correspond aux crêtes papillaires de la pulpe des doigts ou au dessin des veines d'un ou de plusieurs doigts ou de la paume de la personne.

13. Procédé (400) selon la revendication 11 ou 12, dans lequel l'association (403) de la personne au document d'identification (100) à l'aide du signal de réponse réfléchi comprend la comparaison du signal de réponse réfléchi avec un signal de référence.

14. Programme informatique, comprenant des instructions qui ont pour effet que le document d'identification selon la revendication 1 effectue les étapes de procédé selon l'une quelconque des revendications 11 à 13.
